# EUROPÄISCHE PATENTSCHRIFT

(11) **EP 2 390 083 B1**
(45) Veröffentlichungstag und Bekanntmachung des Hinweises auf die Patenterteilung: **30.04.2014**
(21) Anmeldenummer: 11167225.9
(22) Anmeldetag: 24.05.2011
(51) Int. Cl.: B29C 49/78, B29C 49/64, B29C 49/68

(54) **Verfahren und Vorrichtung zur Temperatursteuerung und/oder -regelung einer Heizvorrichtung für Vorformlinge**
Apparatus and method for controlling and/or regulating temperature of a heating device for preforms
Procédé et dispositif de commande et/ou réglage de température d'un dispositif de chauffage pour préformes

(30) Priorität: 25.05.2010 DE 102010021445
(43) Veröffentlichungstag der Anmeldung: 30.11.2011
(73) Patentinhaber: Krones AG, 93073 Neutraubling (DE)
(72) Erfinder: Hirdina, Jochen, 93057 Regensburg (DE); Voth, Klaus, 93083 Obertraubling (DE); Senn, Konrad, 93059 Regensburg (DE); Asbrand, Helmut, 93077 Bad Abbach (DE)
(74) Vertreter: Benninger, Johannes

(56) Entgegenhaltungen:
- DE-A1-102007 016 028
- DE-A1-102007 022 386

## Beschreibung

Die vorliegende Erfindung betrifft ein Verfahren zur Temperatursteuerung und/oder Temperaturregelung einer Heizvorrichtung für Vorformlinge mit den Merkmalen des unabhängigen Verfahrensanspruchs 1. Die Erfindung betrifft weiterhin eine Heizvorrichtung zur Temperierung von Vorformlingen mit den Merkmalen des Anspruchs 9.

Die Herstellung von Getränkebehältern aus thermoplastischem Kunststoff, insbesondere aus dem üblicherweise verwendeten PET, erfolgt üblicherweise mittels eines Streckblasverfahrens. Bei diesem meist zweistufigen Streckblasverfahren werden die Behälter üblicherweise aus spritzgegossenen, rotationssymmetrischen Vorformlingen (sog. Preforms) hergestellt. Diese Vorformlinge bestehen aus einem länglichen, zylindrischen Mantelabschnitt (sog. Body-Bereich) mit abgerundet geschlossenem Boden und einem Halsbereich mit oberer Öffnung, der auch als Mundstücksbereich bezeichnet werden kann. Nahe dieser Öffnung befindet sich normalerweise ein Gewindeabschnitt, der nach unten durch einen Kragen o. dgl. abgegrenzt sein kann. Der Gewindeabschnitt wird beim Spritzgießen des Vorformlings bereits auf das spätere Endmaß hergestellt. Er bleibt auch beim Streckblasvorgang in seiner ursprünglichen Form und bildet beim fertigen Getränkebehälter das Gewinde für den Verschlussdeckel. Der übrige Bereich des Vorformlings wird dagegen verformt und gedehnt. Bei der Verarbeitung werden diese Vorformlinge auf eine definierte Prozesstemperatur erwärmt, um den Umformvorgang beim Streckblasen in der gewünschten Weise zu ermöglichen. Die Erwärmung erfolgt meist mittels Infrarotstrahlung, da auf diese Weise eine definierte und gleichmäßige Temperierung der Vorformlinge ermöglicht ist.

Das zu verarbeitende Kunststoffmaterial (i.d.R. PET) hat die Eigenschaft, dass es beim Verstrecken zu einer Selbstverfestigung (sog. "strain hardening") kommt. Dabei ist die Umformtemperatur von entscheidender Bedeutung. Der Effekt der Selbstverfestigung wird normalerweise bei der Produktion von PET-Behältern genutzt, um die Wanddickenverteilung der Behälter zu steuern und zu optimieren. Je nach Verarbeitungsverfahren können die Vorformlinge über die aufgebrachte Infrarotstrahlung mit einem Temperaturprofil beaufschlagt werden. Das Ziel hierbei ist es, die wärmeren Bereiche so lange vorrangig verformen zu lassen, bis der sich durch die Selbstverfestigung ergebende Verstreckungswiderstand größer wird als der Widerstand der benachbarten kälteren Bereiche. Üblicherweise ist das Temperaturprofil um den Umfang der Vorformlinge gleichmäßig verteilt und kann prozessabhängig in Längsrichtung der Vorformlinge variieren.

Eine Erwärmungsvorrichtung für Kunststoffrohlinge und ein entsprechendes Verfahren sind aus der DE 10 2007 022 386 A1 bekannt.

Um das gewünschte Temperaturprofil auf die Vorformlinge aufzutragen, können mehrere Zonen verwendet werden, bspw. bis zu neun Zonen oder mehr. Diese Mehrzahl von unterschiedlichen Zonen können individuell angesteuert werden, wobei die gewählte Einstellung über eine längere Betriebsdauer der Heizeinrichtung unverändert beibehalten wird. Um auf Veränderungen in den Umgebungsbedingungen reagieren zu können, kann eine Regelung verwendet werden, bei der die Temperatur der Vorformlinge an mindestens einer Messstelle erfasst wird. Über diese Regelung wird versucht, die Temperatur der Vorformlinge an der gewählten Messstelle konstant zu halten. Die Regelgröße bildet die Eingangsstellgröße für alle Heizeinrichtungen, so dass bei einer gemessenen Temperatur, die unterhalb einer eingestellten Solltemperatur liegt, alle Heizeinrichtungen mit einer erhöhten Stellgröße und dadurch mit einer höheren Heizleistung beaufschlagt werden.

Diese Regelung ist i.d.R. unverzichtbar, da sich die Temperaturen der Vorformlinge im Laufe der Zeit verändern können, bspw. nach einiger Betriebdauer und sich allmählich erwärmender Heizeinrichtung. Auch kann sich die Produktionshalle bspw. während eines Betriebstages erwärmen, was ebenfalls Einfluss auf die Erwärmung der Heizeinrichtungen und der Vorformlinge haben kann. Wenn allerdings die Stellgröße zu stark verändert wird, können zwar die unterschiedlichen Heizzonen jeweils prozentual in gleichem Ausmaß beeinflusst und verändert werden, doch kann die Gesamterwärmung stärker als gewünscht abweichen, da sich das gesamte Heizprofil verändert. Durch zu starke Temperaturabweichungen von einer Solltemperatur kann die Behälterqualität negativ beeinflusst werden.

Um diese Probleme zu vermeiden, werden die unterschiedlichen Heizzonensteuerungen in der Praxis manuell angepasst. Zudem können verschiedene Programme für einen Sommerbetrieb und einen Winterbetrieb berücksichtigt werden.

Ein vorrangiges Ziel der Erfindung besteht darin, ein verbessertes Verfahren zur Temperierung von Vorformlingen im Zusammenhang mit einem Streckblasverfahren zur Verfügung zu stellen, bei dem die Vorformlinge mit einer gewünschten Temperaturprofilierung beaufschlagt werden, die auch unter sich verändernden äußeren Bedingungen möglichst exakt den Sollwerten folgen kann. Ein weiteres Ziel der Erfindung besteht darin, eine verbesserte Heizvorrichtung für Vorformlinge zu schaffen, bei der die für die Vorformlinge wirksamen Temperaturen und Temperaturprofile möglichst exakt regelbar sind.

Diese Ziele der Erfindung werden mit den Gegenständen der unabhängigen Patentansprüche erreicht. Weitere vorteilhafte Ausgestaltungen werden durch die Unteransprüche beschrieben.

Zur Erreichung des erstgenannten Ziels schlägt die Erfindung ein Verfahren zur Steuerung und/oder Regelung einer Heizvorrichtung für Vorformlinge aus thermoplastischem Kunststoff, insbesondere aus PET vor, mit dem die Heizvorrichtung in gewünschter Weise geregelt werden kann, um die Vorformlinge vor einem nachfolgenden Blas- bzw. Streckblasvorgang in optimaler Weise temperieren zu können. Der Temperierungsvorgang umfasst wenigstens zwei aufeinander folgende Heizstufen, die vorzugsweise jeweils unterschiedliche Aufgaben erfüllen sollen. Ggf. können auch weitere Heizstufen vorgesehen sein, die eine optimierte Temperierung der Vorformlinge mit einem gewünschten Temperaturprofil ermöglichen können. In der ersten Heizstufe soll eine annähernd gleichmäßige Grundtemperierung von Teilen des Vorformlings, insbesondere jedoch des gesamten Vorformlings erfolgen, die normalerweise ungefähr einer maximalen Erwärmungstemperatur eines Gewindebereichs am oben offenen Halsabschnitt des Vorformlings für eine Aufrechterhaltung von dessen Formstabilität entspricht. Ggf. kann die Grundtemperierung auch mit einer geringeren Temperatur durchgeführt werden, wobei auch dann das Ziel bestehen bleibt, die Temperaturprofilierung für die Vorformlinge in darauf folgenden Heizstufen möglichst exakt regeln zu können, wozu die Reduzierung des Temperaturgefälles zwischen aufeinander folgenden Heizstufen von Vorteil ist. In der zweiten Heizstufe kann eine weitere Temperierung, insbesondere entsprechend eines vorgebbaren Wärmeprofils für den nachfolgenden Blas- bzw. Streckblasvorgang erfolgen. Dabei soll eine erforderliche Temperaturprofilierung in Höhe der Umformtemperatur zumindest des unterhalb des Gewindebereichs und/oder eines darunter angeordneten Kragenbereichs des Vorformlings befindlichen Körperabschnittes erreicht werden. Mit der vorliegenden Erfindung soll ein verbessertes Konzept zur Temperaturschichtung für die Vorformlinge geschaffen werden. Um dies zu erreichen, wird nach der Grundtemperierung der Vorformlinge in der ersten Heizstufe zumindest ein Temperaturwert der Vorformlinge gemessen. Anhand des nach der ersten Heizstufe ermittelten Temperaturwerts können in der zweiten Heizstufe Abweichungen von einem vorgebbaren Sollwert mindestens einer Temperatur der ersten Heizstufe durch Regelung von Heizstrahlern zumindest der zweiten Heizstufe bis zum Ende der Heizvorrichtung ausgeglichen werden.

Vorzugweise werden die Temperaturen der Heizstrahler der ersten und der zweiten Heizstufe gleichzeitig anhand der ermittelten Temperaturen geregelt. Zudem kann es von Vorteil sein, wenn die Temperaturen an mehreren Stellen entlang der Längsachsen der Vorformlinge gemessen und in Abhängigkeit davon die Heizstrahler in der zweiten Heizstufe in den jeweils zugeordneten Höhen geregelt werden. Die Messung der Temperaturen kann bspw. in einem Bereich einer Richtungsänderung eines Infrarotofens erfolgen. Besonders geeignet für diese Temperaturmessung kann insbesondere ein Bereich einer Ofenumkehr eines Infrarot-Linearofens sein.

Die Temperaturanpassungen der zweiten Heizstufe erfolgen vorzugsweise in Abhängigkeit von an mehreren aufeinander folgenden Vorformlingen gemessenen Temperaturen unter Bildung eines Mittelwertes. Auf diese Weise können die Korrekturen der Ofentemperaturen gleichsam durch "Einpendeln" der Temperaturen erfolgen. Hierbei sollen stärkere Regelungsanpassungen vermieden werden. Die Temperaturanpassungen durch Regelung des Ofens sollen möglichst für alle weiteren Vorformlinge "passen" bzw. die richtigen Temperaturen liefern.

Im Wesentlichen geht die vorliegende Erfindung von einem weitgehend herkömmlichen Infrarotofen aus, bei dem ein Teil des Ofenabschnittes bzw. die gesamten Heizeinrichtungen in ihrer Temperatur geregelt werden können.

Die Erwärmung erfolgt zwei- oder mehrstufig, wobei je nach Ausbildung der Ofentemperaturregelung in den einzelnen Stufen eine direktere und besser angepasste Temperaturregelung ermöglicht ist. Die Erwärmung erfolgt normalerweise in zwei aufeinander folgenden Abschnitten bzw. Heizstufen der Heizvorrichtung. Der erste Abschnitt liefert eine Grunderwärmung für die Vorformlinge, um diese möglichst gleichmäßig auf eine Grundtemperatur zu erwärmen, die unterhalb der Erweichungstemperatur für das Kunststoffmaterial liegt, um den Gewindebereich nach Möglichkeit nicht unzulässig zu erwärmen. In dieser Grunderwärmungsphase wird in der Regel noch keine Temperaturschichtung aufgebracht, da eine gleichmäßige Temperaturverteilung über den ganzen Vorformlingkörper von Vorteil ist. Zu diesem Zweck kann ggf. über einen geeigneten Algorithmus eine Zonenschichtung in Abhängigkeit von der Geometrie des Vorformlings (Wanddicke, Entfernung zum Strahler, Länge) vorgegeben werden. Die beim erfindungsgemäßen Verfahren vorgesehene Regelung soll die Temperatur nach Möglichkeit immer auf eine definierte Grundtemperatur bringen, die zwischen mindestens 50°C und bis zu 90°C liegen kann. Auf diese Weise sollen die unterschiedlichen Eingangs- und Lagerbedingungen der Vorformlinge ausgeglichen werden. Da diese in unterschiedlichen Lagerorten bei unterschiedlichen Temperaturen gelagert und bevorratet werden können, bevor sie dem Streckblasvorgang zugeführt werden, ist es zur Erreichung möglichst guter Verformungsergebnisse notwendig, gleiche Eingangsbedingungen für die Vorformlinge zu schaffen. Demnach ist die erste Temperierungsstufe durch eine Grunderwärmungsphase und die zweite Temperierungsstufe durch eine nachfolgende Temperaturprofilierungsphase gebildet. In der den zweiten Abschnitt bildenden Temperaturprofilierungsphase werden die Vorformlinge mit in Längsrichtung unterschiedlich bzw. geschichteten Temperaturen beaufschlagt.

Gemäß einer bevorzugten Variante des erfindungsgemäßen Verfahrens ist zumindest eine Temperaturmessung am Ausgang der ersten Heizstufe zur Erfassung der Temperatur der Vorformlinge nach ihrer Grundtemperierung und zur Anpassung der Temperatur der ersten Heizstufe und/oder aller Heizstufen des Ofens vorgesehen. Eine sinnvolle Alternative und/oder Kombination dieser Temperaturregelung zur Anpassung der ersten Heizstufe sieht eine Temperaturmessung nach der ersten Heizstufe bzw. in einem mittleren Bereich des Ofens vor, die bspw. auf bekannte Weise mittels einer Pyrometer-Messeinrichtung erfolgen kann, auf deren Grundlage jedoch alle Heizstufen, also auch die Temperaturprofilierungsstufen der zweiten Heizstufe und/oder ggf. weiterer Heizstufen gleichermaßen geregelt werden. Bei dieser alternativen Ausführungsvariante der Ofenregelung geht es somit darum, in der Ofenmitte oder nach der ersten Heizstufe einen Temperaturwert zu erfassen, bspw. mittels eines Pyrometers, und anschließend anhand dieses Wertes den gesamten Ofen zu regeln, um die Ausschussrate (sog. Scraprate) an zu stark oder zu wenig erhitzten Vorformlingen, die aufgrund fehlerhafter Temperierung zu Störungen im Blasformvorgang führen, zu reduzieren. Es ist bei dieser Verfahrensvariante somit nicht erforderlich, eine getrennte Regelung für die unterschiedlichen Heizstufen vorzusehen. Es soll vielmehr eine gemeinsame Regelung aller Heizstufen auf Grundlage der Temperaturmessung zwischen den Heizstufen ausreichen. Durch eine solche Temperaturkorrektur bzw. -regelung ist es möglich, auf kurzfristige Änderungen der Umgebungsbedingungen im Stand-By-Betrieb zu reagieren. Prinzipiell ist es auch vorstellbar, eine solche Regelung mehrfach vorzusehen, bspw. durch Temperaturmessung nach der ersten Heizstufe und nach der zweiten Heizstufe, wenn bspw. eine dritte und/oder weitere Heizstufen vorhanden sind.

Wahlweise kann zumindest eine weitere Temperaturmessung nach der zweiten Heizstufe zur Erfassung der Endtemperatur der Vorformlinge nach der ersten und/oder zweiten Heizstufe bzw. der Temperaturprofilierungsphase und eine Berücksichtigung der gemessenen Temperaturen bei der Anpassung der ersten Heizstufe vorgesehen sein. Dabei wird zumindest die nach der ersten Heizstufe gemessene Temperatur zur Regelung der Heizleistung dieser ersten Heizstufe verarbeitet. Es kann auch vorgesehen sein, dass sowohl die nach der ersten Stufe bzw. der Grunderwärmungsphase gemessene Temperatur als auch die nach der zweiten Stufe bzw. der Temperaturprofilierungsphase gemessene Endtemperatur zur Regelung der Heizleistung der ersten Stufe verarbeitet wird. Es kann auch vorgesehen sein, dass sowohl die nach der ersten Stufe bzw. der Grunderwärmungsphase gemessene Temperatur als auch die nach der zweiten Stufe bzw. der Temperaturprofilierungsphase gemessene Endtemperatur zur Regelung der Heizleistung der ersten Stufe und/oder der zweiten Stufe verarbeitet wird.

In der Temperaturprofilierungsphase kann aufgrund der geregelten Temperatur in der Grunderwärmungsphase immer von Vorformlingen mit dem gleichen Ausgangszustand ausgegangen werden. Idealerweise würde sich die Temperaturschichtung danach nicht mehr verändern, so dass die Temperatur bzw. die Heizleistung der Heizstufen nicht mehr nachgeregelt werden müsste und somit auf einen Regelkreis verzichtet werden könnte. Um dennoch eine Kontrolle über die tatsächliche Temperatur der Vorformlinge zu erhalten und Nebeneffekte wie eine Alterung der Heizeinrichtungen wie Infrarotstrahler beim Einlauf in die Blasstation auszugleichen, sollte auch am Ofenausgang eine Temperaturmessung erfolgen. Der dabei gewonnene Messwert kann dazu verwendet werden, um den Stellwert der Ofenregelung für die Grunderwärmung anzupassen.

In einer alternativen Ausführungsform ist es auch möglich, den am Ofenausgang gemessenen Wert zur Regelung und Steuerung der zweiten Heizstufe zu verwenden, sofern dies auf Grund von Alterung der Heizeinrichtungen oder anderen Nebeneffekten notwendig ist. Bei der Regelung und Steuerung der zweiten Heizstufe wird vorzugsweise auch der Messwert, der nach der ersten Stufe ermittelt wurde, berücksichtigt.

Von Vorteil ist es zudem, wenn die Vorformlinge im Bereich der ersten Heizstufe bzw. der Grunderwärmungsphase auf eine weitgehend gleichmäßige Grundtemperatur zwischen ca. 50°C und ca. 90°C temperiert werden. Diese Temperatur richtet sich in erster Linie nach der maximal zulässigen Temperatur für den Halsbereich der aus PET oder einem anderen geeigneten thermoplastischen Kunststoff bestehenden Vorformlinge, da dieser Bereich mit dem später verwendeten Gewinde während des Erwärmens und des nachfolgenden Streckblasens nicht verändert und verformt werden soll, sondern während der gesamten Verarbeitung maßhaltig und unverändert bleiben soll.

Eine vorteilhafte Variante des erfindungsgemäßen Verfahrens sieht vor, dass die Vorformlinge im Bereich der ersten Heizstufe mittels in die oben offenen Vorformlinge eintauchender Heizstäbe auf die Grundtemperatur erwärmt werden. Diese Heizstäbe wirken als sog. Booster, weil sie in der Lage sind, den jeweiligen Vorformling innerhalb einer sehr kurzen Zeit von der Lagertemperatur auf die gewünschte Grundtemperatur zu bringen, die in der nachfolgenden Heizstufe unter Aufprägung eines Temperaturprofils auf ein nochmals erhöhtes Temperaturniveau gebracht wird. Dieser Booster bzw. Heizstab kann eine typische Länge aufweisen, die einem einzelnen Heizstrahler entspricht, so dass damit eine weitgehend homogene Erwärmung der Vorformlinge ermöglicht ist. Darüber hinaus können jedoch auch weitere Strahler als Komponenten dieses Boosters fungieren, die für die gewünschte Grunderwärmung der Vorformlinge eine Wärmestrahlung von außen auf die Vorformlinge aufbringen. Darüber hinaus kann eine vorteilhafte Variante dadurch gebildet sein, dass für die Erzeugung der Grunderwärmung Teile einer Ofenabwärme genutzt werden, die ansonsten ungenutzt nach außen geleitet würde. Diese in vorteilhafter Weise zu nutzende Ofenabwärme kann bspw. durch Umlenkung warmer Abluft und/oder durch Leitung dieser Abluft durch geeignete Wärmetauscher genutzt und dadurch abgekühlt werden, so dass damit auch eine Energieeinsparung verbunden werden kann.

Wie bereits erwähnt, dient die zweite Heizstufe im Wesentlichen dazu, die Vorformlinge in dieser Temperaturprofilierungsphase mit einem über ihre Länge angepassten und/oder unterschiedlichen Temperaturprofil zu versehen. Hierbei ist darauf zu achten, den Gewindebereich beim Erwärmen des Halsabschnittes und des übrigen Vorformlings nicht zu stark zu erwärmen, damit er auch bei den nachfolgenden Verfahrensschritten seine Formstabilität beibehält. Da der Gewindebereich und der sog. Neckring für die Handhabung und den Transport benötigt werden, ist es wichtig, dass diese Bereiche des Vorformlings nicht modifiziert werden. Die Vorformlinge können im Bereich der zweiten Heizstufe insbesondere mittels Strahlungsheizeinrichtungen erwärmt werden. Diese können ggf. mit einer geregelten Oberflächenkühlung versehen sein, um Überhitzungen zu vermeiden.

Das entsprechend der erfindungsgemäßen Konfiguration geregelte Verfahren ermöglicht eine sehr schnelle Anpassung der Regelgrößen, d.h. der Heizleistung der ersten Heizstufe, da die für die Regelung zu berücksichtigende Eingangsgröße als gemessene Temperatur unmittelbar nach der ersten Heizstufe abgegriffen wird. Gegenüber bisher bekannten Messverfahren erfolgt dabei die Regelung bereits nach ca. der halben Heizstrecke, was ein zu starkes Abdriften der Regelgrößen verhindern kann. Da damit die Temperaturregelung exakter wird, kann auf effektive Weise die Verfahrensqualität erhöht und die Ausschussrate an fehlerhaft umgeformten Vorformlingen reduziert werden. In der zweiten Heizstufe wird die Temperaturschichtung vorzugsweise unter gleich bleibenden Bedingungen aufgebracht, wodurch ebenfalls das Abdriften der Prozessparameter verhindert und die gleich bleibende Qualität aufrechterhalten wird. Das beschriebene Heizsystem der Grunderwärmungsstufe mit den optional verwendbaren Boostern bzw. Heizstäben ist besonders energieeffizient zu betreiben, da auf diese Weise eine sehr schnelle Erwärmung der Vorformlinge auf die benötigte Prozesstemperatur erreicht werden kann.

Ein weiterer Vorteil besteht darin, dass die Prozesse und Prozessparameter ohne Einschränkungen in den Maschinen implementiert werden können, wobei keinerlei Einschränkungen hinsichtlich der Übertragbarkeit auf gleichartige oder ähnliche Maschinen vorliegen, auch wenn diese jeweils abweichende Konfigurationen aufweisen sollten. Weiterhin werden alle denkbaren Einflüsse, die mit der Maschinenaufstellung und dem Standort zusammenhängen, weitgehend eliminiert, wodurch die Inbetriebnahme beschleunigt werden kann. Ein solcher Standortfaktor kann bspw. eine typische Hallentemperatur sein, die als Umgebungsparameter die Erwärmung der Vorformlinge spürbar beeinflussen könnte.

Zur Erreichung des oben genannten Ziels der Erfindung ist zudem eine Heizvorrichtung zur Temperierung von Vorformlingen aus thermoplastischem Kunststoff für einen nachfolgenden Blas- bzw. Streckblasvorgang vorgesehen. Diese erfindungsgemäße Heizvorrichtung umfasst wenigstens zwei unterschiedliche bzw. aufeinander folgende Heizstufen, wobei zumindest die erste Heizstufe eine Heizvorrichtung zur weitgehend gleichmäßigen Grundtemperierung der Vorformlinge aufweist. Eine weitere Ausführungsvariante der erfindungsgemäßen Heizvorrichtung kann vorsehen, dass zumindest die erste Heizstufe durch wenigstens einen in die Vorformlinge eintauchenden Heizstab gebildet ist, der den Vorformling von innen erwärmt und auf die Grundtemperatur bringt.

Weiterhin kann vorgesehen sein, dass zumindest nach der ersten Heizstufe und vor der zweiten Heizstufe ein Temperatursensor angeordnet ist, der über eine Signalübertragung mit einer Regelungseinheit zur Regelung der Heizleistung der ersten Heizstufe gekoppelt ist, so dass die erste Heizstufe besonders schnell regelbar ist. Weiterhin kann am Ausgang der zweiten Heizstufe ein weiterer Temperatursensor angeordnet sein, der mit der Regelungseinheit gekoppelt ist. Damit kann die Regelungsgüte weiter verbessert werden. Weitere Aspekte, Ausführungsvarianten und Vorteile bei der Konfiguration und dem Betrieb der erfindungsgemäßen Heizvorrichtung sind im Zusammenhang mit den oben bereits genannten Verfahrensvarianten zu sehen, da diese Verfahrensvarianten allesamt als Optionen für einen Betrieb der Heizvorrichtung zu sehen sind.

Weiterhin ist an dieser Stelle zu betonen, dass die vorliegende Erfindung grundsätzlich zur Anwendung in Mikrowellenöfen, Rundläuferöfen, Linearöfen, stationären Öfen etc. geeignet ist. Weiterhin ist die Verwendung von individuellen Heiztaschen denkbar, wobei jeder Vorformling in einer separaten Heiztasche selektiv temperiert wird. Ergänzend sei darauf hingewiesen, dass neben den erwähnten zwei getrennten Heizstufen ggf. weitere Heizstufen vorgesehen sein können, ohne dass dies an dieser Stelle im Detail erläutert ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt anhand eines Diagramms die Zusammenhänge von Dehnung und daraus resultierender Materialspannung bei der Verformung von PET-Material.
Fig. 2 zeigt anhand eines weiteren Diagramms ein Temperaturprofil, mit dem ein Vorformling an unterschiedlichen Abschnitten jeweils einer unterschiedlichen Erwärmung unterzogen wird.
Fig. 3 zeigt ein schematisches Blockschaltbild einer in einem Regelkreis verknüpften zweistufigen Heizvorrichtung.
Fig. 4 zeigt eine schematische Darstellung einer Behälterformungsvorrichtung zur Streckblasumformung von Vorformlingen zu Flüssigkeitsbehältern.
Fig. 5 zeigt in einer schematischen Darstellung eine Heizstrecke gemäß Fig. 4.
Fig. 6 zeigt eine schematische Ansicht einer bevorzugten Ausführungsvariante der Behälterumformungsvorrichtung gemäß Fig. 4.
Fig. 7 zeigt eine weitere Variante einer Behälterumformungsvorrichtung mit einer zusätzlichen Vorwärmung.
Fig. 8 zeigt eine Detailansicht des Boosters bzw. der ersten Heizstufe.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

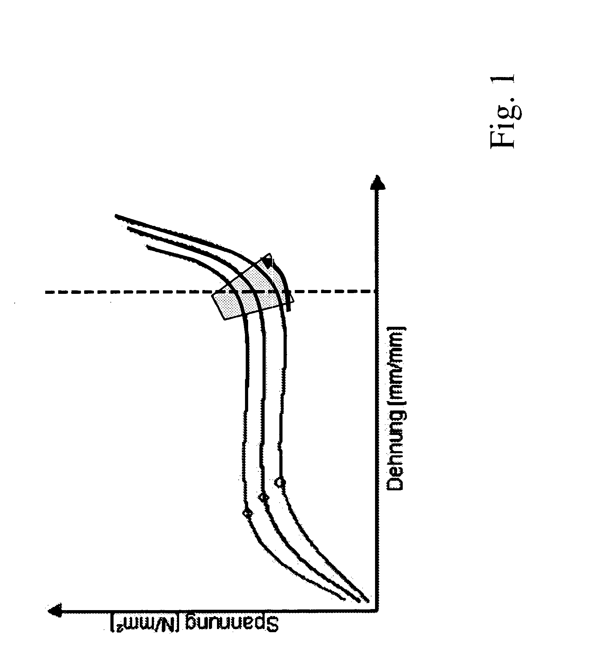

Die Darstellung der Fig. 1 zeigt anhand eines qualitativen Diagramms die Zusammenhänge von Dehnung und daraus resultierender Materialspannung bei der Verformung von PET-Material, wie es für streckgeblasene Getränkebehälter verwendet wird. So ist auf der horizontalen Achse die Dehnung aufgetragen, während auf der vertikalen Achse die daraus resultierende Materialspannung aufgetragen ist. Die beispielhaft zu verstehenden Kurven verdeutlichen bei einer anfänglich kleinen Dehnung eine zunächst annähernd linear ansteigende Spannung, die sich danach über einen weiteren Bereich abflacht, so dass auch bei zunehmender Materialdehnung nahezu keine Zunahme der Spannung erfolgt. Bei einer bestimmten Grenzdehnung steigt die Spannung relativ stark an und führt am Ende der Kurven schließlich zum Reißen des Materials. Wie die drei beispielhaft zu verstehenden Kurven verdeutlichen, können die Festigkeitseigenschaften der Kunststoffkörper durch leichte Absenkung der Umformtemperatur verbessert werden, da bei geringeren Temperaturen und gleich bleibender Dehnung jeweils geringere Materialspannungen auftreten.

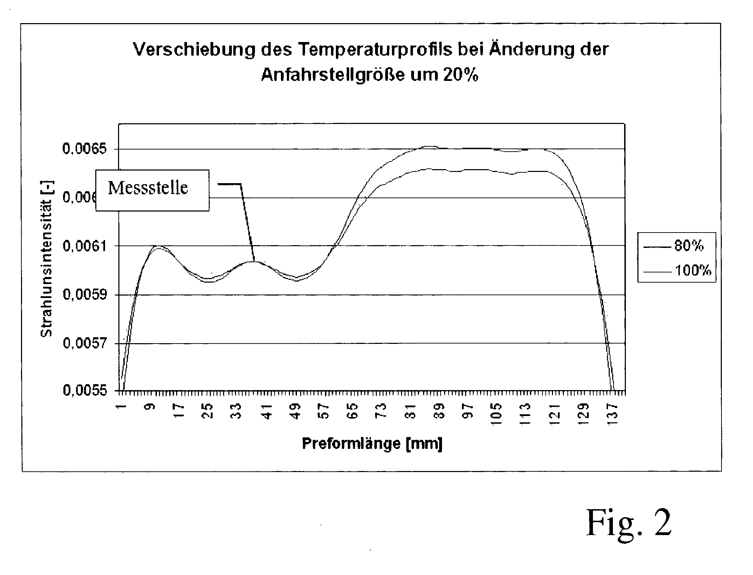

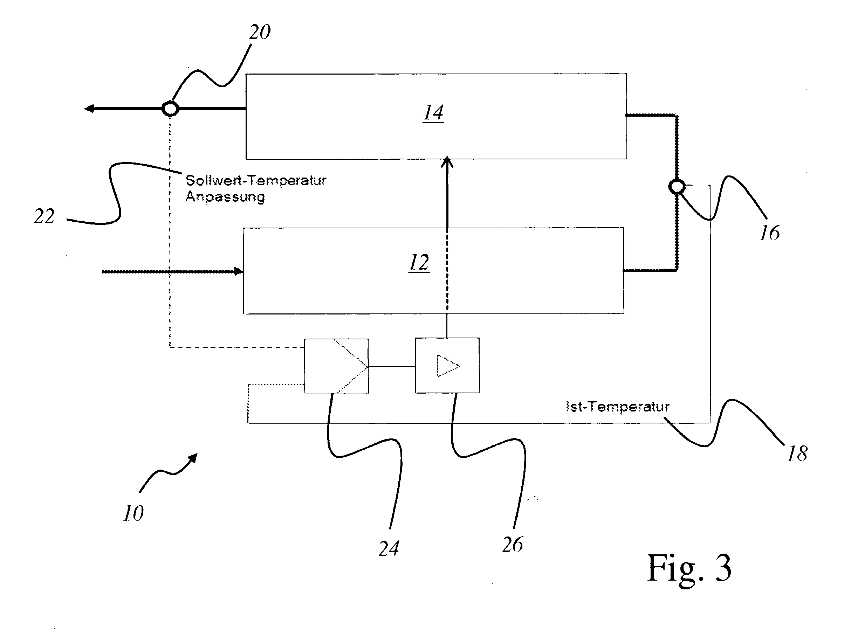

Die Darstellung der Fig. 2 zeigt anhand eines weiteren Diagramms ein Temperaturprofil, mit dem ein Vorformling an unterschiedlichen Abschnitten jeweils einer unterschiedlichen Erwärmung unterzogen werden kann. So ist auf der horizontalen Achse des Diagramms die typische Länge eines Vorformlings von ca. 137 mm ("Preformlänge") und auf der vertikalen Achse die dimensionslose Strahlungsintensität aufgetragen. Das Diagramm verdeutlicht einerseits die im oberen Abschnitt bis zu einer Länge des Vorformlings von ca. 60 mm deutlich reduzierte und im unteren, gewindeferneren Bereich erhöhte Strahlungsintensität. Aus den beiden beispielhaft aufgetragenen Kurven und deren deutlichem Abstand voneinander wird erkennbar, dass eine Regelung einer zweiten Heizstufe zur Aufbringung eines gewünschten Temperaturprofils mittels Auswertung und Berücksichtigung des Messsignals eines im Bereich des Vorformlinghalses odergewindes angeordneten Temperatursensors zu erheblichen Abweichungen des gesamten Heizprofils führen kann. Da unter diesen Abweichungen die gesamte Prozess- und Produktqualität leiden kann, sieht die Erfindung eine verbesserte Regelung der Grunderwärmungsphase in der ersten Heizstufe vor, wie anhand der nachfolgend beschriebenen Fig. 3 näher zu erläutern sein wird.

Die Fig. 3 zeigt in einem schematischen Blockschaltbild eine in einem Regelkreis verknüpfte zweistufige Heizvorrichtung 10, die der Temperierung von Vorformlingen aus thermoplastischem Kunststoff für einen nachfolgenden Blas- bzw. Streckblasvorgang dient. Die in einem Regelkreis verschaltete Heizvorrichtung 10 umfasst zwei aufeinander folgende Heizstufen 12 und 14, wobei in der ersten Heizstufe 12 eine annähernd gleichmäßige Grundtemperierung der darin befindlichen Vorformlinge über ihr gesamtes Volumen bzw. ihre gesamte Ausdehnung erfolgen kann, die ungefähr einer maximalen Erwärmungstemperatur für einen Gewindebereich am oben offenen Halsabschnitt des Vorformlings entspricht, bei der dessen Formstabilität aufrechterhalten wird. In der zweiten Heizstufe 14 kann dagegen eine entsprechend eines vorgebbaren Wärmeprofils ungleichmäßig verteilte, für den Blas- bzw. Streckblasvorgang erforderliche Erweichungstemperatur zumindest des unterhalb des Gewindebereichs und/oder eines darunter angeordneten Kragenbereichs des Vorformlings befindlichen Körperabschnittes erfolgen.

Um die gewünschte Regelung der Heizvorrichtung 10 zu ermöglichen, ist ein erster Temperatursensor 16 zur Erfassung einer Ist-Temperatur 18 am Ausgang der ersten Heizstufe 12 zur möglichst exakten Erfassung der Temperatur der Vorformlinge nach ihrer Grundtemperierung und zur Anpassung der zweiten Heizstufe 14 zum Ausgleich von Temperaturabweichungen vorgesehen. Das Ausgangssignal des ersten Temperatursensors 16 liefert einen Wert für die Ist-Temperatur 18. Weiterhin kann eine optionale weitere Temperaturmessung nach der zweiten Heizstufe 14 mittels eines zweiten Temperatursensors 20 vorgesehen sein, die zur Erfassung der Endtemperatur der Vorformlinge nach der Temperaturprofilierungsphase in der zweiten Heizstufe 14 vorgesehen sein kann. Der mit dem optionalen zweiten Temperatursensor 20 gemessene Wert für eine Soll-Temperatur 22 kann - sofern diese Auswertung gewünscht ist - zusammen mit der vom ersten Temperatursensor 16 gelieferten Ist-Temperatur 18 in einer Summierschaltung 24 und einer nachgeordneten Verstärkerstufe 26 zur Ansteuerung der zweiten Heizstufe 14 verarbeitet werden.

Auf die beschriebene Weise kann ein sehr schnell reagierendes Regelsystem zur Ofenregelung realisiert werden, bei dem aufgrund der günstigen Platzierung der beiden Temperatursensoren 16 und 20 ein starkes Abweichen der Heiztemperaturen der beiden Heizstufen 12 und 14 zuverlässig verhindert werden kann.

Die Vorformlinge können im Bereich der ersten Heizstufe 12 bzw. der Grunderwärmungsphase auf eine weitgehend gleichmäßige Grundtemperatur zwischen ca. 50°C und ca. 90°C temperiert werden. Diese Temperatur muss zumindest unterhalb der Fließ- bzw. Erweichungstemperatur des für die Vorformlinge verwendeten thermoplastischen Kunststoffs liegen, da insbesondere der Gewindebereich bei der in der ersten Heizstufe 12 erfolgenden Temperierung formstabil bleiben muss, da dort keine Abschirmung bzw. Kühlung des Hals- und Gewindebereichs erfolgt, wie dies in der zweiten Heizstufe 14 normalerweise der Fall ist. Die Vorformlinge können im Bereich der ersten Heizstufe 12 bspw. mittels in die oben offenen Vorformlinge eintauchender Heizstäbe auf die Grundtemperatur erwärmt werden. Anschließend werden die Vorformlinge im Bereich der zweiten Heizstufe 14 bzw. der Temperaturprofilierungsphase mit einem über ihre Länge angepassten und/oder unterschiedlichen Temperaturprofil beaufschlagt, was bspw. mit in unterschiedlichen Höhen unterschiedlich stark abstrahlenden Strahlerleisten zur Erzeugung einer angepassten Infrarotstrahlung erfolgen kann.

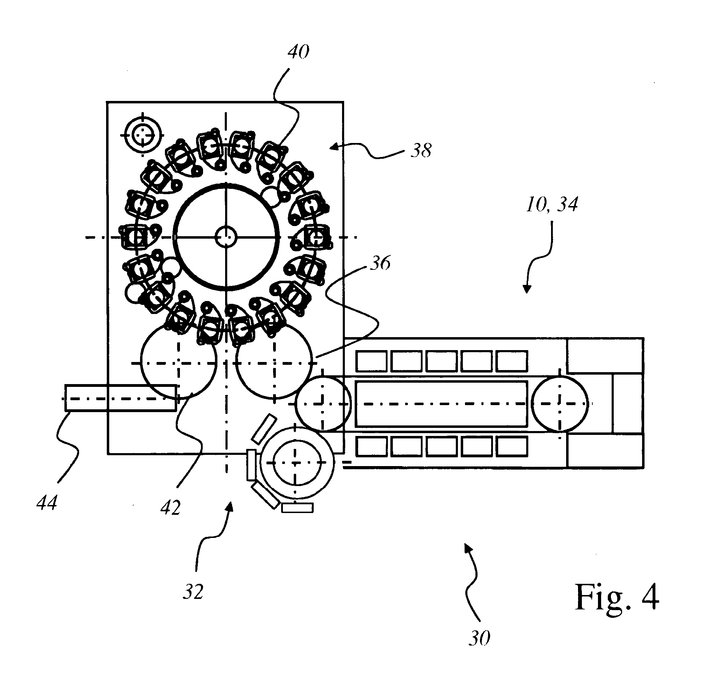

Die schematische Darstellung der Fig. 4 zeigt eine Behälterformungsvorrichtung 30 zur Streckblasumformung von Vorformlingen zu Flüssigkeitsbehältern. Die Behälterformungsvorrichtung 30 umfasst einen rotierenden Einlaufbereich 32 für die Vorformlinge, eine Heizstrecke 34 mit einer geregelten zweistufigen Heizvorrichtung 10 gemäß Fig. 3 zur Temperierung der Vorformlinge und einen sich daran anschließenden rotierenden ersten Übergabestern 36 zur Förderung der temperierten Vorformlinge zu einer rotierenden Streckblasvorrichtung 38. Diese rotierende Streckblasvorrichtung 38 weist eine Mehrzahl von Blasformstationen 40 auf, in denen die Vorformlinge zu Flüssigkeitsbehältern umgeformt werden, bevor sie mittels eines zweiten Übergabesterns 42 zu einer linear fördernden Fördervorrichtung 44 übergeben werden, mit der die Behälter insbesondere zu einer Füllstation (nicht dargestellt) befördert werden.

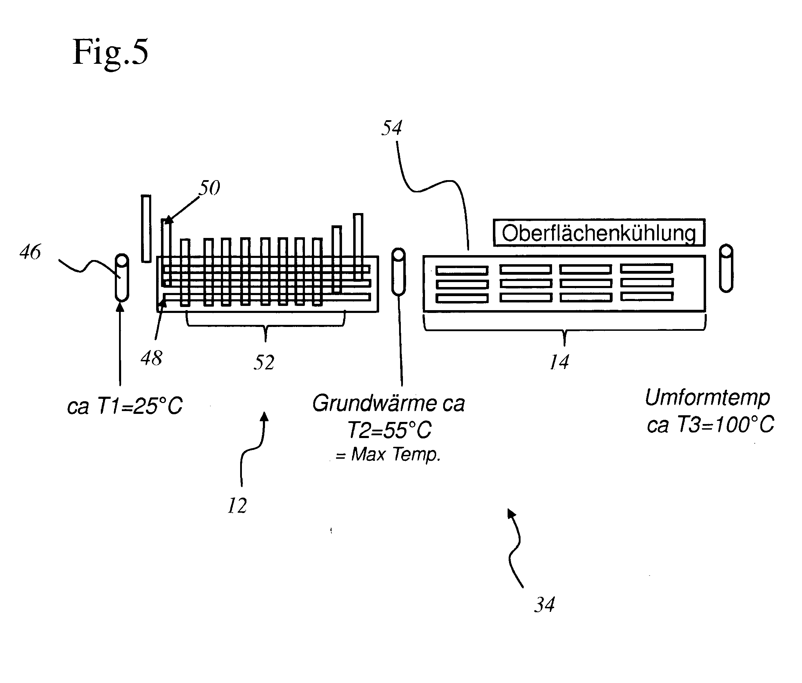

Die schematische Darstellung der Fig. 5 zeigt in einer schematischen Darstellung eine Heizstrecke 34 gemäß Fig. 4, die Teil der Heizvorrichtung 10 gemäß Fig. 3 ist. Bei der in Fig. 5 dargestellten Heizstrecke 34 werden die zunächst relativ kalten Vorformlinge 46, die bspw. eine Temperatur T1 von ca. 25°C aufweisen können, in der ersten Heizstufe 12 (vgl. Fig. 3) auf eine Grundwärme T2 von ca. 55°C erwärmt. Diese Grundwärme T2 entspricht im vorliegenden Ausführungsbeispiel der maximalen Gewindetemperatur, der die Vorformlinge 46 ausgesetzt werden können, ohne dass sich der Gewindebereich verformen kann. Die erste Heizstufe 12 kann wahlweise einen Strahlerbereich 48 mit Infrarotstrahlern und/oder zusätzliche Heizstäbe 50 aufweisen, die zur schnellen und präzisen Erwärmung der Vorformlinge 46 jeweils in diese eintauchen können. Beide Heizeinrichtungen 48 und 50 können wahlweise kombiniert werden, wodurch die erste Heizstufe 12 als Booster 52 wirkt, mit dem die Vorformlinge 46 schnell auf exakt die gewünschte Grundtemperatur T2 (hier: ca. 55°C) gebracht werden können.

Die sich daran anschließende zweite Heizstufe 14 umfasst ebenfalls einen Strahlerbereich 54 mit Infrarotstrahlern, die jedoch unterschiedlich geregelt sind, um die gewünschte Temperaturprofilierung zu erzeugen, so dass einerseits die notwendige Umformtemperatur T3 von ca. 100°C erreicht wird, dass aber andererseits der Gewindebereich der Vorformlinge 46 auf dem Temperaturniveau von T2 bleibt. Wie bereits anhand der Fig. 3 erläutert, wird die Temperierung zumindest der zweiten Heizstufe 14 auf Grundlage einer Auswertung der Signale 18 eines zwischen den beiden Heizstufen 12 und 14 angeordneten Temperatursensors 16 geregelt.

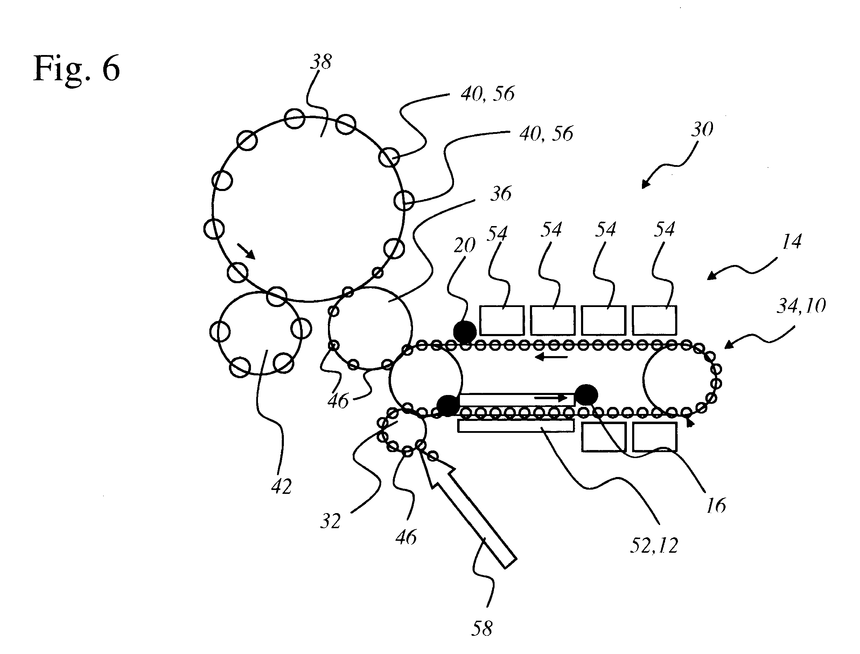

Die Darstellung der Fig. 6 zeigt eine schematische Ansicht einer bevorzugten Ausführungsvariante der Behälterumformungsvorrichtung gemäß Fig. 4. So ist auch hier wieder die Behälterformungsvorrichtung 30 mit dem rotierenden Einlaufbereich 32 für die Vorformlinge, der Heizstrecke 34 mit der geregelten zweistufigen Heizvorrichtung 10 gemäß Fig. 3 zur Temperierung der Vorformlinge und dem sich daran anschließenden rotierenden ersten Übergabestern 36 zur Förderung der temperierten Vorformlinge zur rotierenden Streckblasvorrichtung 38 verdeutlicht. In dieser rotierenden Streckblasvorrichtung 38 werden die Vorformlinge 46 mittels der am Außenumfang angeordneten Blasformstationen 40 zu Flüssigkeitsbehältern 56 umgeformt, bevor sie mittels des zweiten Übergabesterns 42 zur Fördervorrichtung 44 übergeben werden, mit der die Behälter 56 zur Füllstation oder einer anderen Behandlungsstation (nicht dargestellt) befördert werden.

Die Heizstrecke 34 weist knapp hinter dem Einlaufbereich 32 den Booster 52 bzw. die erste Heizstufe 12 zur Grundtemperierung der Vorformlinge 46 auf. Dem Booster 52 nachgeordnet sind die Strahlerbereiche 54 der zweiten Heizstufe 14, im gezeigten Ausführungsbeispiel durch insgesamt sechs hintereinander angeordnete Heizkästen angedeutet. Dem rotierenden Einlaufbereich 32 mit dem Einlaufstern ist ein linearer Zuführbereich 58 vorgeordnet, mit dem die Vorformlinge 46 der Behälterumformungsvorrichtung 30 zugeführt werden.

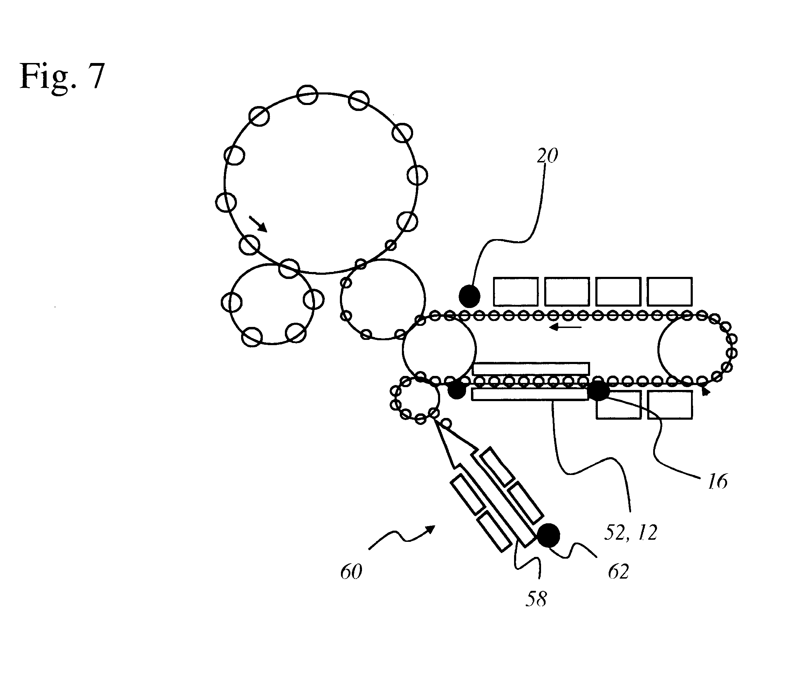

Entsprechend Fig. 7 kann dieser lineare Zuführbereich 58 mit einer zusätzlichen Vorwärmvorrichtung 60 ausgestattet sein, die bspw. von der Abwärme der Heizvorrichtung 10 o. dgl. gespeist sein kann, so dass auf diese Weise ein erheblicher Anteil der ansonsten ungenutzt abzuführenden Wärmeenergie zum Vorwärmen der Vorformlinge und damit zur Effizienzsteigerung des Temperierungsprozesses genutzt werden kann. Der übrige Aufbau der Vorrichtung 30 unterscheidet sich nicht von der Ausführungsvariante gemäß Fig. 6.

Beiden Varianten gemäß Fig. 6 und Fig. 7 gemeinsam sind die Temperaturmesspunkte, die schematisch angedeutet sind. So befindet sich der erste Temperatursensor 16 unmittelbar nach der ersten Heizstufe 12 bzw. dem Booster 52. Der optional zu verstehende zweite Temperatursensor 20 befindet sich hinter der zweiten Heizstufe 14, d.h. hinter dem letzten Heizkasten mit den darin angeordneten Strahlerbereichen 54, wie dies in den Figuren 6 und 7 jeweils verdeutlicht ist. Wahlweise kann gemäß Fig. 7 ein dritter Temperatursensor 62 im linearen Zuführbereich 58 und der Vorwärmung 60 bzw. vor diesen Bereichen angeordnet sein, wie dies in Fig. 7 verdeutlicht ist. Das Ausgangssignal dieses dritten Temperatursensors 62 kann vorzugsweise zusätzlich im Regelkreis der Heizvorrichtung 10 (vgl. Fig. 3) berücksichtigt werden.

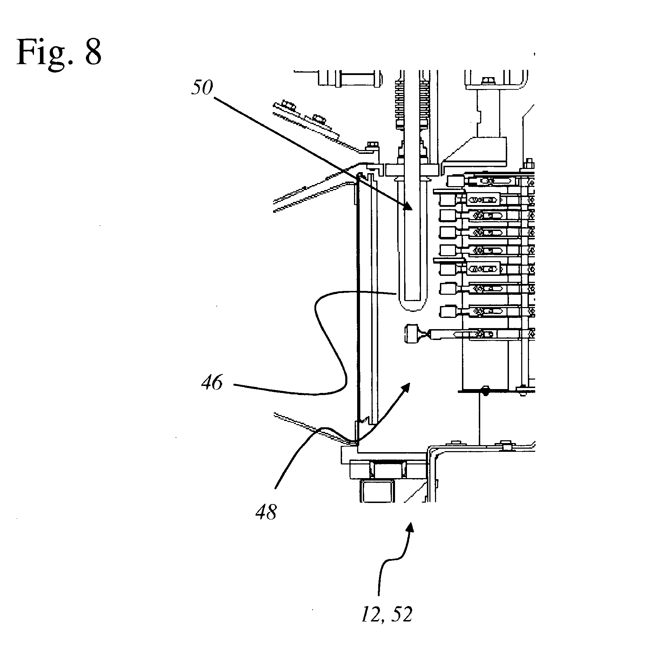

Die Detailansicht der Fig. 8 verdeutlicht eine Ausführungsvariante der ersten Heizstufe 12 bzw. des Boosters 52. Hierbei kann gemäß Fig. 5 vorgesehen sein, dass der auf die Grundtemperatur T2 von ca. 55°C zu erwärmende Vorformling 46 mittels des in diesen vollständig eintauchenden Heizstabes 50 und/oder mittels der Infrarotstrahler des Strahlerbereichs 48 erwärmt wird. Die Strahler des Strahlerbereichs 48 können vorzugsweise über eine geeignete Kühlung verfügen, die durch strömende Kühlluft eine Überhitzung der Strahler im Heizofen 10 verhindert.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste:

10 Heizvorrichtung
12 Erste Heizstufe
14 Zweite Heizstufe
16 Erster Temperatursensor
18 Ist-Temperatur
20 Zweiter Temperatursensor
22 Soll-Temperatur
24 Summierschaltung
26 Verstärkerstufe
30 Behälterumformungsvorrichtung
32 Einlaufbereich
34 Heizstrecke
36 Erster Übergabestern
38 Streckblasvorrichtung
40 Blasformstation
42 Zweiter Übergabestern
44 Fördervorrichtung
46 Vorformling
48 Strahlerbereich
50 Heizstab
52 Booster
54 Strahlerbereich
56 Flüssigkeitsbehälter
58 Linearer Zuführbereich
60 Vorwärmvorrichtung
62 Dritter Temperatursensor
T1 Grundtemperatur
T2 Grundwärme, Erwärmungstemperatur
T3 Umformtemperatur, Erweichungstemperatur

## Patentansprüche

1. Verfahren zur Temperatursteuerung und/oder -regelung einer Heizvorrichtung (10) für Vorformlinge (46) aus thermoplastischem Kunststoff zu deren Temperierung vor einem nachfolgenden Blas- bzw. Streckblasvorgang, insbesondere Verfahren zur Temperatursteuerung und/oder -regelung eines Infrarotofens mit einem ersten Heizabschnitt (12) und einem dem ersten Heizabschnitt (12) nachgeordneten zweiten Heizabschnitt (14), bei dem der Temperierungsvorgang mindestens zwei räumlich aufeinander folgende Heizabschnitte (12, 14) umfasst, wobei in dem ersten Heizabschnitt (12) eine Grundtemperierung der Vorformlinge (46) erfolgt, **dadurch gekennzeichnet, dass** danach zumindest ein Temperaturwert der Vorformlinge (46) gemessen wird und anhand des nach dem ersten Heizabschnitt (12) ermittelten Temperaturwerts in dem zweiten Heizabschnitt (14) Abweichungen von einem vorgebbaren Sollwert mindestens einer Temperatur des ersten Heizabschnitts (12) durch Regelung von Heizstrahlern zumindest des zweiten Heizabschnitt (14) bis zum Ende der Heizvorrichtung (10) ausgeglichen werden.

2. Verfahren nach Anspruch 1, bei dem die Temperaturen der Heizstrahler des ersten und des zweiten Heizabschnitts (12, 14) gleichzeitig anhand der ermittelten Temperaturen geregelt werden.

3. Verfahren nach Anspruch 1 oder 2, bei die Temperaturen an mehreren Stellen entlang der Längsachsen der Vorformlinge (46) gemessen und in Abhängigkeit davon die Heizstrahler in dem zweiten Heizabschnitt (14) in den jeweils zugeordneten Höhen geregelt werden.

4. Verfahren nach einem der Ansprüche 1 bis 3, bei dem die Temperaturmessung in einem Bereich einer Richtungsänderung eines Infrarotofens, insbesondere im Bereich einer Ofenumkehr eines Infrarot-Linearofens erfolgt.

5. Verfahren nach einem der Ansprüche 1 bis 4, bei dem die Temperaturanpassungen des zweiten Heizabschnitts (14) in Abhängigkeit von an mehreren aufeinander folgenden Vorformlingen (46) gemessenen Temperaturen unter Bildung eines Mittelwertes erfolgen.

6. Verfahren nach einem der Ansprüche 1 bis 5, bei dem in dem ersten Heizabschnitt (12) eine annähernd gleichmäßige Grundtemperierung jeweils der gesamten Vorformlinge (46) erfolgt, die höchstens einer maximalen Erwärmungstemperatur (T2) für einen Gewindebereich am oben offenen Halsabschnitt der Vorformlinge (46) für eine Aufrechterhaltung von dessen Formstabilität entspricht.

7. Verfahren nach Anspruch 6, bei dem zumindest eine Temperaturmessung am Ausgang des ersten Heizabschnitts (12) zur Erfassung der Temperatur (18) der Vorformlinge (46) nach ihrer Grundtemperierung und zur gleichzeitigen Anpassung des ersten Heizabschnitts (12) und des zweiten Heizabschnitts (14) sowie ggf. weiterer Heizabschnitte vorgesehen ist.

8. Verfahren nach einem der Ansprüche 1 bis 7, bei dem die Vorformlinge (46) im Bereich des ersten Heizabschnitts (12) bzw. der Grunderwärmungsphase auf eine weitgehend gleichmäßige Grundtemperatur (T2) zwischen ca. 50°C und ca. 90°C temperiert werden.

9. Heizvorrichtung (10) zur Temperierung von Vorformlingen (46) aus thermoplastischem Kunststoff für einen nachfolgenden Blas- bzw. Streckblasvorgang, wobei die Heizvorrichtung (10) wenigstens zwei unterschiedliche aufeinander folgende Heizabschnitte (12, 14) umfasst, wobei zumindest der erste Heizabschnitt (12) eine Heizvorrichtung zur weitgehend gleichmäßigen Grundtemperierung der Vorformlinge (46) aufweist, **dadurch gekennzeichnet, dass** zumindest nach dem ersten Heizabschnitt (12) und vor dem zweiten Heizabschnitt (14) ein erster Temperatursensor (16) angeordnet ist, der über eine Signalübertragung mit einer Regelungseinheit (24, 26) zur Regelung der Heizleistung des zweiten Heizabschnitts (14) gekoppelt ist.

10. Heizvorrichtung nach Anspruch 9, bei der der erste Temperatursensor (16) über eine Signalübertragung mit einer Regelungseinheit (24, 26)
zur gemeinsamen Regelung der Heizleistungen aller Heizabschnitte (12, 14) gekoppelt ist.

11. Heizvorrichtung nach Anspruch 9 oder 10, bei der am Ausgang des zweiten Heizabschnitts (14) ein weiterer Temperatursensor (20) angeordnet ist, der mit der Regelungseinheit (24, 26) gekoppelt ist.

## Claims

1. Method for the temperature control and/or regulation of a heating device (10) for preforms (46) made from a thermoplastic material, for controlling the temperature of said preforms prior to a subsequent blow molding or stretch blow molding process, especially method for the temperature control and/or regulation of an infrared oven with a first heating stage (12) and a second heating stage (14) arranged downstream of the first heating stage (12), whereby the temperature control process comprises at least two spatially distinct, consecutive heating stages (12, 14), whereby the entire preforms (46) are heated to a near uniform base temperature in the first heating stage (12), **characterized in that** at least one temperature reading of the preforms (46) is taken after the first heating stage (12) and wherein deviations from a specified set point temperature are determined on the basis of the temperature reading after the first heating section (12) whereby the radiators in at least the second heating stage (14) are regulated and / or adjusted according to the temperature reading taken after the first heating stage (12) thereby compensating the temperature deviations of the preforms (46) from the specified set point temperature before the exit of the preforms (46) from the heating device (10).

2. Method according to claim 1, whereby the temperatures of the radiators of the first heating stage and the second heating stage (12, 14) are regulated simultaneously on the basis of the temperature readings.

3. Method according to claims 1 or 2, whereby temperature readings are taken at several positions along the longitudinal axis of the preforms (46) and whereby the radiators of the second heating stage (14) are respectively regulated in the associated heights.

4. Method according to one of the claims 1 to 3, whereby the temperature reading is taken in a section of the infrared oven with a change of direction, especially whereby the temperature reading is taken in a turnaround section of a linear infrared oven.

5. Method according to one of the claims 1 to 4, whereby the thermal adjustment of the second heating stage (14) is done depending on the average preform temperature calculated from several temperature readings taken from successive preforms (46).

6. Method according to one of the claims 1 to 5, whereby a near uniform base temperature of the entire preform (46) is achieved in the first heating stage(12), whereby said base temperature corresponds at the most to a maximum heating temperature (T2) for maintaining the dimensional stability of the thread section at the preforms' (46) open-topped neck section

7. Method according to claim 6, whereby at least one temperature reading is provided at the exit of the first heating stage (12) for recording the preforms' (46) basic temperature (18) after the basic heating and for the simultaneous adjustment of the first heating stage (12) and the second heating stage (14) and further heating stages where appropriate.

8. Method according to one of the claims 1 to 7, whereby the preforms (46) are heated in the section of the first heating stage (12) or the basic heating phase to a largely uniform base temperature (T2) ranging between approximately 50°C and approximately 90°C.

9. Heating device (10) for the temperature control of preforms (46) made from a thermoplastic material for a subsequent blow molding or stretch blow molding process, whereby the said heating device (10) comprises at least two distinct, consecutive heating stages (12, 14), whereby at least the first heating stage (12) comprises a heating device for bringing the preforms (46) to a largely uniform base temperature, **characterized in that** at least one first temperature sensor (16) is arranged downstream of the first heating stage (12) and upstream of the second heating stage (14), with said first temperature sensor (16) being coupled via signal transmission to a control unit (24, 26) for regulating the heat output of the second heating stage (14).

10. Heating device (10) according to claim 9, whereby the first temperature sensor (16) is coupled via signal transmission to a control unit (24, 26) for jointly regulating the heat output of the all heating stages (12, 14).

11. Heating device according to claims 9 or 10, whereby a further temperature sensor (20) is arranged at the exit of the second heating stage (14) and whereby this further temperature sensor (20) is coupled to the control unit (24, 26).

## Revendications

1. Procédé de commande et/ou de réglage de température d'un dispositif de chauffage (10) pour des préformes (46) en matière synthétique thermoplastique, pour tempérer celles-ci avant une opération subséquente de soufflage ou bien d'étirage-soufflage, en particulier procédé de commande et/ou de réglage de température d'un four à infrarouge ayant une première section de chauffage (12) et une deuxième section de chauffage (14) disposée en aval de ladite première section de chauffage (12), dans lequel l'opération de thermorégulation comprend au moins deux sections de chauffage (12, 14) successives dans l'espace, dans la première section de chauffage (12) étant réalisée une thermorégulation de base des préformes (46), **caractérisé par le fait que** l'on mesure ensuite au moins une valeur de température des préformes (46) et que, dans la deuxième section de chauffage (14), des écarts d'une valeur de cosigne prédéterminable d'au moins une température de la première section de chauffage (12) sont compensés jusqu'au bout du dispositif de chauffage (10) à partir de la valeur de température déterminée en aval de ladite première section de chauffage (12), en réglant des radiateurs chauffants d'au moins la deuxième section de chauffage (14).

2. Procédé selon la revendication 1, dans lequel les températures des radiateurs chauffants des première et deuxième sections de chauffage (12, 14) sont réglées simultanément à partir des températures déterminées.

3. Procédé selon la revendication 1 ou 2, dans lequel les températures sont mesurées sur plusieurs points le long des axes longitudinaux des préformes (46) et que, à partir de cela, les radiateurs chauffants dans la deuxième section de chauffage (14) sont réglés aux hauteurs respectivement associées.

4. Procédé selon l'une quelconque des revendications 1 à 3, dans lequel la mesure de température se fait dans une zone d'un changement de direction d'un four à infrarouge, en particulier au niveau d'un renversement de four d'un four linéaire à infrarouge.

5. Procédé selon l'une quelconque des revendications 1 à 4, dans lequel les adaptations de température de la deuxième section de chauffage (14) sont réalisées en fonction de températures mesurées sur plusieurs préformes (46) successives, en formant une valeur moyenne.

6. Procédé selon l'une quelconque des revendications 1 à 5, dans lequel, dans ladite première section de chauffage (12), est réalisée une thermorégulation de base approximativement uniforme respectivement de l'ensemble des préformes (46), qui correspond tout au plus à une température maximale d'échauffement (T2) pour une zone filetée sur la portion de col supérieure ouverte des préformes (46) pour maintenir la stabilité de forme de celle-ci.

7. Procédé selon la revendication 6, dans lequel on prévoit au moins une mesure de température à la sortie de la première section de chauffage (12) pour détecter la température (18) des préformes (46) après leur thermorégulation de base et pour adapter en même temps la première section de chauffage (12) et la deuxième section de chauffage (14) ainsi que, le cas échéant, d'autres sections de chauffage.

8. Procédé selon l'une quelconque des revendications 1 à 7, dans lequel les préformes (46) sont tempérées, dans la zone de ladite première section de chauffage (12) ou bien de la phase de thermorégulation de base, à une température de base (T2) dans une large mesure uniforme comprise entre environ 50 °C et 90 °C à peu près.

9. Dispositif de chauffage (10) destiné à tempérer des préformes (46) en matière synthétique thermoplastique pour une opération subséquente de soufflage ou bien d'étirage-soufflage, ledit dispositif de chauffage (10) comprenant au moins deux sections de chauffage (12, 14) différentes successives, au moins la première section de chauffage (12) présentant un dispositif de chauffage pour une thermorégulation de base dans une large mesure uniforme des préformes (46), **caractérisé par le fait qu'**un premier capteur de température (16) est disposé au moins en aval de ladite première section de chauffage (12) et en amont de ladite deuxième section de chauffage (14), qui est couplé via une transmission de signaux à une unité de réglage (24, 26) destinée à régler la puissance de chauffage de la deuxième section de chauffage (14).

10. Dispositif de chauffage selon la revendication 9, dans lequel ledit premier capteur de température (16) est couplé via une transmission de signaux à une unité de réglage (24, 26) pour le réglage commun des puissances de chauffage de l'ensemble des sections de chauffage (12, 14).

11. Dispositif de chauffage selon la revendication 9 ou 10, dans lequel un autre capteur de température (20) est disposé à la sortie de ladite deuxième section de chauffage (14) et est couplé à ladite unité de réglage (24, 26).
